# EUROPÄISCHE PATENTSCHRIFT

(11) **EP 2 481 474 B1**
(45) Veröffentlichungstag und Bekanntmachung des Hinweises auf die Patenterteilung: **24.06.2015**
(21) Anmeldenummer: 11152325.4
(22) Anmeldetag: 27.01.2011
(51) Int. Cl.: B01D 63/02, B01D 63/06, B01D 65/00, B01D 71/02, B01D 39/20, B29C 37/00, F16L 41/00

(54) **Dichtungsanordnung für stabförmige keramische Filterelemente**
Sealing assembly for rod-shaped ceramic filter elements
Agencement d'étanchéité pour éléments de filtre céramique en forme de tiges

(43) Veröffentlichungstag der Anmeldung: 01.08.2012
(73) Patentinhaber: Filtrox Engineering AG, 9000 St. Gallen (CH)
(72) Erfinder: Loser, Werner, 9242, Oberuzwil (CH); Eberlein, Robert, 8458, Dorf (CH)
(74) Vertreter: Hepp Wenger Ryffel AG

(56) Entgegenhaltungen:
- EP-A1- 1 302 227
- EP-A2- 0 270 051
- EP-A2- 1 374 979
- WO-A1-02/053270
- DE-A1- 19 846 041
- DE-U1- 9 207 879
- FR-A1- 2 854 820
- US-A1- 2005 200 124
- US-A1- 2006 123 753
- US-B1- 6 565 632

## Beschreibung

Die vorliegende Erfindung betrifft eine Dichtungsanordnung für keramische Filterelemente, sowie derartige Filterelemente.

Keramische Filterelemente sind gebräuchliche Vorrichtungen zur Abtrennung von Komponenten aus Gasen oder Flüssigkeiten. Eine Anzahl von stabförmigen keramischen Filterelementen wird parallel zueinander in einem Membranmodul angeordnet und mittels Lochplatten fest eingespannt. Die Lochplatten weisen Öffnungen auf, in welche die stabförmigen keramischen Filterelemente eingeführt werden. Der Durchmesser einer solchen Öffnung ist in der Regel etwas grösser als der Durchmesser des einzuführenden Endbereichs des Filterelements. Um das Filterelement auch während des unter Druck erfolgenden Filtriervorgangs dicht in der Öffnung zu befestigen und den Innenraum des Membranmoduls abzudichten, ist eine O-Ringdichtung vorgesehen, welche auf einem oder mehreren Endbereichen des Filterelements radial oder axial wirkend angeordnet wird und den Zwischenraum zwischen den Wänden der Öffnung und dem Filterelement ausfüllt.

In der DE 198 46 041 A1 ist ein Verfahren zur Herstellung eines derartigen Membranmoduls beschrieben, bei welchem die O-förmigen Dichtungsringe zunächst auf einem Halter mit im Wesentlichen gleichen Abmessungen wie dem Filterelement bearbeitet und erst dann auf das eigentliche Filterelement aufgesteckt werden.

In der DE 198 46 41 A1 sowie in der EP 0 270 051 A2 wird eine Dichtungsanordnung offenbart, bei der die stabförmigen Filterelemente mit einer Dichtung in die Öffnungen einer Lochplatte eingeführt werden, wobei die Öffnungen eine Schulter zur Begrenzung der Einführtiefe aufweisen.

In der DE 103 22 015 A1 ist eine Dichtungsanordnung für ein keramisches Filterelement beschrieben. Hierbei wird das auf dem stabförmigen Filterelement befindliche O-förmige Dichtelement derart in eine mit einer Deckenplatte verbundenen Dichtelementaufnahme eingeführt, dass es teilweise unter Abdichtung verformt wird. Ein weiterer Bereich des Dichtelements liegt aber innerhalb der Dichtelementaufnahme berührungs- und druckfrei vor und kann Verkantungen und Verschiebungen des Filterelements zu einem gewissen Grad kompensieren.

Dieser Stand der Technik weist den Nachteil auf, dass die Abdichtung nur mit Kraftaufwand und damit verbundener Gefahr der Beschädigung oder Schwächung der Endbereiche der Filterelemente möglich ist.

Zudem sitzen die Filterelemente in den O-förmigen Dichtungen vergleichsweise fest und können von diesen nur mit erheblichem Kraftaufwand und unter teilweiser Zerlegung des gesamten Membranmoduls demontiert werden. Auch dies birgt das Risiko einer Beschädigung der Filterelemente.

Weiterhin erfüllt das Dichtungsprinzip aus dem Stand der Technik nicht die Anforderungen an ein hygienisches Design, da es nicht ausreichend gereinigt werden kann.

Schliesslich müssen im Stand der Technik zum Schutz der Enden der keramischen Filterelemente weitere Anschlagdämpfer bereitgestellt werden. Dies bedeutet zusätzlichen Aufwand und schützt die Keramik-Enden nicht sicher genug.

Es war die Aufgabe der vorliegenden Erfindung, eine Dichtungsanordnung für stabförmige keramische Filterelemente bereitzustellen, welche die vorstehend beschriebenen Nachteile aus dem Stand der Technik überwindet.

Die vorstehende Aufgabe wurde durch eine Dichtungsanordnung gemäss Anspruch 1 gelöst.

Die vorliegende Erfindung beruht auf einer Abkehr vom Stand der Technik. Es werden keine Dichtelemente auf die stabförmigen keramischen Filterelemente aufgebracht, bevor diese in den Öffnungen von als Decke und Boden eines Membranmoduls fungierenden Lochplatten befestigt werden. Stattdessen wird ein Dichtelement innerhalb einer Öffnung einer derartigen Lochplatte bereitgestellt. Beim Einbringen des Filterelements in die Öffnung kommt es zum Kontakt zwischen Dichtelement und Filterelement und somit zu einer Abdichtung.

Das Dichtelement ist aus einem elastischen Material gefertigt, ringförmig und verformt sich, wenn das Filterelement in die entsprechende Öffnung der Lochplatte eingeführt wird. Dies führt zur Ausbildung einer dichtenden Verbindung zwischen Dichtelement und Filterelement.

Andererseits ist das Dichtelement in der Öffnung der Lochplatte fest angeordnet. Das Dichtelement befindet sich in einer sich über den gesamten Öffnungsumfang in gleicher Höhe erstreckenden Nut und ist dort fest gelagert. Die feste Lagerung des Dichtelements wirkt einem zu weiten Einführen des Filterelements in die Öffnung entgegen. Als Konsequenz dichtet das Dichtelement das Filterelement nicht nur ab, sondern fixiert das Filterelement in axialer und radialer Richtung und fungiert auch als Anschlagdämpfer für das keramische Ende des Filterelements. Dieses liegt auf dem Dichtelement auf und kommt nicht in Kontakt mit den Wänden der Öffnung in der Lochplatte.

Die Dimensionen von Öffnung in der Lochplatte, Dichtelement und Durchmesser des stabförmigen keramischen Filterelements sind so gewählt, dass die vorstehend beschriebenen Wirkungen eintreten. Der Durchmesser der Öffnung der Lochplatte ist geringfügig grösser als der Durchmesser des stabförmigen keramischen Filterelements. Das Dichtelement ragt radial gleichförmig so weit in das Innere der Öffnung hinein, dass an der Stelle, an welcher sich das Dichtelement in der Öffnung befindet, ein freier Raum in der Öffnung mit einem Durchmesser vorhanden ist, welcher kleiner als der Durchmesser des stabförmigen keramischen Filterelements ist. Beim Einführen des Filterelements in die Öffnung wird das Filterelement dadurch in das Dichtelement hinein gedrückt, ohne an diesem vorbei zu gelangen. Es wird eine totraumfreie Dichtung ausgebildet, d.h. zwischen den in Kontakt befindlichen Abschnitten des Filterelements und des Dichtelements gibt es keinen freien Zwischenraum.

Das Dichtelement ist aus einem elastischen Material gefertigt. Dieses Material muss neben der Erfüllung der erforderlichen elastischen Eigenschaften auch über einen Temperaturbereich von mindestens 0°C bis 90°C stabil sein, d.h. sowohl unter Filtrationsbedingungen als auch unter Sterilisationsbedingungen. Derartige Materialien sind dem Fachmann bekannt. Bevorzugt sind hochelastische Gummi-Materialien wie beispielsweise EPDM (Ethylen-Propylen-Dien-Kautschuk).

Gemäss einer bevorzugten Ausführungsform ist der Oberflächenabschnitt des Dichtelements, welcher für die Wechselwirkung mit dem stabförmigen keramischen Filterelement vorgesehen ist, d.h. der frei im Innenraum der Öffnung befindliche und in Richtung des Filterelements zeigende Oberflächenabschnitt, im eingebauten unverformten Zustand relativ zur Grundfläche der Lochplatte geneigt, vorzugsweise um 30-60°, besonders bevorzugt um 45°, wobei der Oberflächenabschnitt in das Innere der Öffnung nach unten geneigt ist. Nach unten bedeutet hier und im Folgenden vom Filterelement wegweisend. Dies ermöglicht eine möglichst optimale Wechselwirkung zwischen Filterelement und Dichtelement gemäss den vorstehend beschriebenen Prinzipien.

Noch weiter bevorzugt ist es, wenn das stabförmige keramische Filterelement an seiner zur Einführung in die Lochplatte vorgesehenen Seite abgeschrägte Kanten aufweist. Vorzugsweise sind die Kanten um 30-60° unter Bildung eines sich zum Ende des Filterelements hin verjüngenden Konus abgeschrägt. Beim Einführen des Filterelements kommt es dadurch zu einer optimalen Wechselwirkung mit dem geneigten Oberflächenabschnitt des Dichtelements und somit zu einer besonders guten Dicht- und Anschlagdämpfwirkung.

Gemäss einer bevorzugten Ausführungsform der vorliegenden Erfindung besitzt das Dichtelement im unverformten Zustand (d.h. vor Kontakt mit einem Filterelement) einen etwa dreieckförmigen Querschnitt, wobei die Kanten vorzugsweise abgerundet sind. Gemäss dieser Ausführungsform besitzt die Nut in der Öffnung zur Aufnahme des Dichtelements ebenfalls einen entsprechenden etwa dreieckigen Querschnitt, dessen drei Kanten durch die Nutränder und eine Innenkante gebildet werden. Zumindest die Innenkante ist hierbei vorzugsweise ebenfalls abgerundet. Um eine vorstehend beschriebene geneigte Anordnung des Dichtelements in der Öffnung zu gewährleisten, liegt die Innenkante bei dieser Ausführungsform unterhalb des Niveaus der unteren Randkante der Nut.

Gemäss einer besonders bevorzugten Ausführungsform ist die untere Randkante der Nut gegenüber der oberen Randkante der Nut radial etwas in das Innere der Öffnung versetzt, beispielsweise um 0,5 bis 5 mm, so dass innerhalb der Öffnung eine Stufe ausgebildet wird. Dadurch wird der Anschlagdämpfungseffekt des Dichtelements verstärkt.

Gemäss einer alternativen Ausführungsform der vorliegenden Erfindung kann die Innenkante der Nut aber auch auf dem gleichen Niveau liegen wie die untere Randkante der Nut. Eine solche Ausführungsform weist fabrikationstechnische Vorteile auf. Es ergibt sich dadurch eine horizontale Auflagefläche in der Nut. Gemäss dieser alternativen Ausführungsform weist das Dichtelement im unverformten Zustand (d.h. vor Kontakt mit einem Filterelement) keinen exakt dreieckförmigen Querschnitt auf. Vielmehr besitzt das Dichtelement eine der Nut entsprechende viereckige Form, wobei die Kanten vorzugsweise abgerundet sind.

Die gemäss der vorliegenden Erfindung zu verwendenden stabförmigen keramischen Filterelemente sind an sich bekannt und müssen hier nicht näher erläutert werden. Gemäss der vorliegenden Erfindung bevorzugt sind Filterelemente, welche nach dem Cross-Flow-Prinzip betrieben werden. Hierbei fliesst das Unfiltrat (d.h. nicht filtrierte Flüssigkeit) durch kanalförmige Bohrungen entlang der Aussenfläche des Filterelements, während das Filtrat quer zur Strömungsrichtung des Unfiltrats durch die Membran des Filterelements in den Innenraum des Filterelements hineinströmt und von dort aus abgeleitet wird.

Gängige Filterelemente haben Durchmesser von 20 bis 60 mm, beispielsweise 25 mm, 42 mm oder 52 mm und umfassen eine oder mehrere kanalförmige Bohrungen. Die keramischen Filterelemente umfassen einen Grundkörper und eine Membran (filtrierende Schicht). Die Porengrösse des Grundkörpers liegt in einem Bereich von beispielsweise 10 bis 50 µm, vorzugsweise 15 bis 30 µm, besonders bevorzugt 20 µm. Die Membrane (filtrierende Schicht) auf den Innenwänden der Kanäle umfasst eine oder mehrere Schichten und besitzt eine Dicke von 0,5 bis 10 µm. Die Porengrösse der Membrane liegt je nach Anwendung in einem Bereich von 0,05 bis 1,4 µm. Vorzugsweise werden die Filterelemente mit einer Durchflussgeschwindigkeit von 2-5 m/s, vorzugsweise 3-5 m/s betrieben.

Die stabförmigen keramischen Filterelemente werden auf bekannte Art in einem Membranmodul parallel zueinander angeordnet. Vorzugsweise und abhängig vom Durchmesser der Filterelemente sind in einem derartigen Membranmodul etwa 30 bis 60 Filterelemente vorhanden, wobei aber je nach Modulgrösse auch Ausgestaltungen mit 1 bis 200 Filterelementen zur Anwendung kommen. Beispielsweise werden bei einem Modulgehäuse mit einem Durchmesser von 450 mm bei einem Durchmesser des Filterelements von 42mm 52 Filterelemente und bei einem Durchmesser des Filterelements von 52mm 36 Filterelemente im Membranmodul angeordnet.

Gemäss einer bevorzugten Ausführungsform der vorliegenden Erfindung weisen die Filterelemente an der zur Einführung in eine Lochplatte vorgesehenen Seite abgeschrägte Kanten auf, vorzugsweise um 30 bis 60°, insbesondere bevorzugt um 40-50° abgeschrägte Kanten.

Die keramischen Filterelemente werden zwischen zwei Lochplatten eingespannt, welche als Deckenplatte und Bodenplatte des Membranmoduls fungieren. Die Lochplatten schliessen den Innenraum des Membranmoduls nach oben und unten hin ab.

Die Lochplatten sind an sich bekannt. Sie weisen eine der Anzahl an Öffnungen auf, welche der Anzahl an im Membranmodul befindlichen keramischen Filterelementen entspricht. Gemäss einer bevorzugten Ausführungsform überschreiten, wie vorstehend ausgeführt, die Durchmesser der Öffnungen die Durchmesser der in die Öffnungen einzuführenden keramischen Filterelemente um einen geringfügigen Betrag, vorzugsweise im Bereich von 1 bis 10 mm.

Die erfindungsgemässen Lochplatten unterscheiden sich von herkömmlichen Lochplatten dadurch, dass sie eine Anordnung zur festen Bereitstellung des vorstehend beschriebenen Dichtelements aufweisen. Erfindungsgemäss handelt es sich hierbei um eine Nut, welche sich über den gesamten Öffnungsumfang in gleicher Höhe erstreckt. Erfindungsgemäss ist es selbstverständlich bevorzugt, dass sämtliche Öffnungen der Lochplatte mit der erfindungsgemässen Dichtanordnung ausgestattet sind. Es ist aber auch erfindungsgemäss denkbar, dass nicht sämtliche Öffnungen mit der erfindungsgemässen Dichtanordnung ausgestattet sind. Es ist auch denkbar, dass nur eine Lochplatte oder das beide Lochplatten mit der erfindungsgemässen Dichtanordnung ausgestattet sind.

Erfindungsgemäss bevorzugt ist die Nut möglichst nahe am Rand der Öffnung in der Lochplatte angeordnet, sodass das Filterelement nur sehr wenig, vorzugsweise maximal bis zu einem Drittel der gesamten Öffnungstiefe, ausgehend von der Seite, von welcher aus das Filterelement eingeführt wird, in die Öffnung gelangt. Gemäss einer besonders bevorzugten Ausführungsform der vorliegenden Erfindung kann sich die Nut aus hygienischen Gründen sogar direkt am Rand der Öffnung befinden, so dass das Filterelement nur sehr wenig in die entsprechende Öffnung bewegt werden kann.

Gemäss einer bereits vorstehend diskutierten bevorzugten Ausführungsform der vorliegenden Erfindung besitzt die Nut in der Öffnung zur Aufnahme des Dichtelements einen dreieckigen Querschnitt, dessen drei Kanten durch die Nutränder und eine Innenkante gebildet werden. Zumindest die Innenkante ist hierbei vorzugsweise abgerundet. Vorzugsweise liegt die Innenkante bei dieser Ausführungsform unterhalb des Niveaus der unteren Randkante der Nut. Gemäss einer alternativen Ausführungsform der vorliegenden Erfindung kann die Innenkante der Nut aber auch auf dem gleichen Niveau liegen wie die untere Randkante der Nut. Eine solche Ausführungsform weist fabrikationstechnische Vorteile auf. Es ergibt sich dadurch eine horizontale Auflagefläche in der Nut.

Gemäss einer besonders bevorzugten Ausführungsform ist die untere Randkante der Nut gegenüber der oberen Randkante der Nut etwas in das Innere der Öffnung versetzt, beispielsweise um 0,5 bis 5 mm, so dass innerhalb der Öffnung eine Stufe ausgebildet wird.

Das erfindungsgemässe Dichtelement kann auf einfache Weise in die vorstehend beschriebene Nut in der Öffnung der Lochplatte eingeführt und ebenso einfach aus dieser wieder entfernt werden. Somit ist ein einfacher Austausch dieses Bauteils sichergestellt. Das erfindungsgemässe keramische Filterelement ist zwar mit Hilfe des Dichtelements abgedichtet, aber mit diesem nicht derart fest verbunden, dass ein Herausnehmen des Filterelements aus der Öffnung der Lochplatte einen erheblichen Kraftaufwand erforderlich machen würde. Vielmehr kann das Filterelement erfindungsgemäss sehr einfach und ohne sonderlichen Kraftaufwand in die Öffnung eingeführt und aus dieser wieder entnommen werden. Ein Risiko einer Beschädigung des Filterelements ist somit minimiert. Gleichzeitig ist das Filterelement in der Öffnung der erfindungsgemässen Lochplatte sicher positioniert und vor Beschädigung durch Druckausschläge aufgrund der guten Anschlagdämpfung des Dichtelements geschützt.

Weiterhin können sämtliche Bauteile aufgrund der einfachen Demontierbarkeit und Zugänglichkeit gut gereinigt werden. Membranmodule zur Trennung von Stoffen aus Flüssigkeiten oder Gasen sind an sich bekannt. Das erfindungsgemässe Membranmodul zeichnet sich durch die innovative Dichtungsanordnung aus, welche vorstehend beschrieben wurde. Erfindungsgemäss bevorzugt handelt es sich um ein Dual-Flow-Membranmodul, d.h. die Filterelemente sind zu zwei Bündeln zusammengefasst, welche in entgegengesetzten Flussrichtungen betrieben werden. Dual-Flow-Module sind ebenfalls an sich bekannt.

Das erfindungsgemässe Membranmoduls ist insbesondere zur Filtration von alkoholischen und nicht-alkoholischen Getränken, besonders bevorzugt von Bier geeignet.

Die vorliegende Erfindung wird nachstehend anhand von nicht einschränkenden Zeichnungen näher erläutert. Es zeigen:
- Fig. 1: eine schematische Querschnittsansicht einer Ausführungsform eines erfindungsgemässen Membranmoduls,
- Fig. 2: eine Draufsicht auf eine Ausführungsform einer erfindungsgemässe Lochplatte,
- Fig. 3a: eine schematische Querschnittsansicht einer Ausführungsform der erfindungsgemässen Dichtungsanordnung,
- Fig. 3b: eine vergrösserte Darstellung eines Abschnitts aus der Fig. 3a,
- Fig. 4: eine erste Ausgestaltung einer Ausführungsform der erfindungsgemässen Dichtungsanordnung, und
- Fig. 5: eine zweite Ausgestaltung einer Ausführungsform der erfindungsgemässen Dichtungsanordnung.
- Fig. 6: eine erste Ausgestaltung einer alternativen Ausführungsform der erfindungsgemässen Dichtungsanordnung, und
- Fig. 7: eine zweite Ausgestaltung einer alternativen Ausführungsform der erfindungsgemässen Dichtungsanordnung.

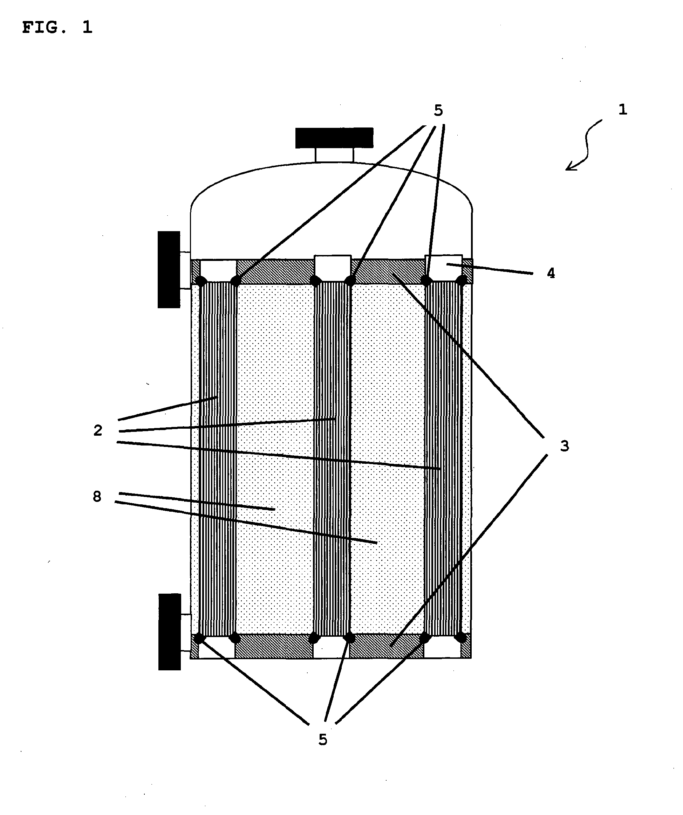

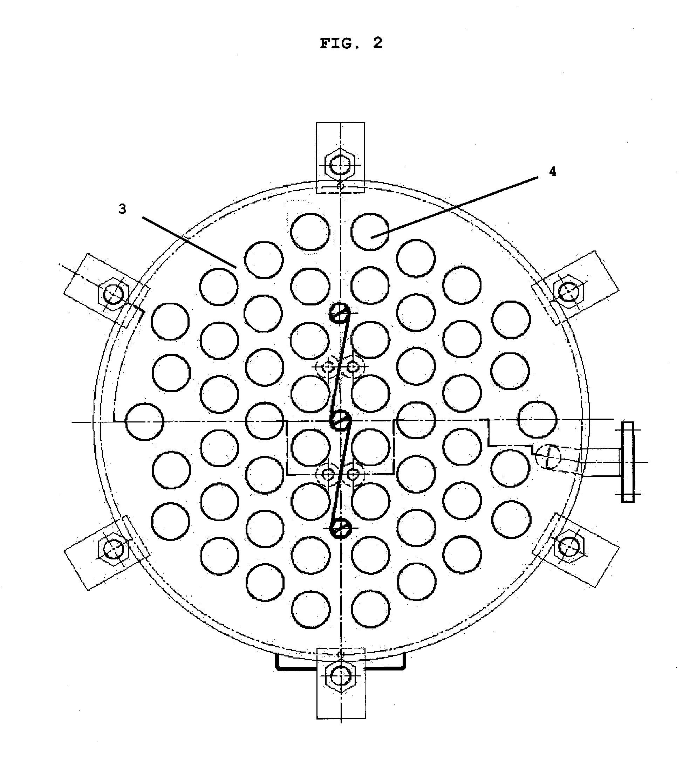

In Fig. 1 ist eine schematische Querschnittsansicht einer Ausführungsform eines erfindungsgemässen Membranmoduls 1 gezeigt. Mehrere stabförmige keramische Filterelemente 2 mit kanalförmigen Bohrungen (aus Gründen der Einfachheit sind hier nur 3 Elemente gezeigt; in Realität umfasst das Membranmodul 30 bis 60 derartiger Filterelemente) sind zwischen zwei Lochplatten 3 eingespannt. Wie in Fig. 2 gezeigt umfassen diese Lochplatten 3 eine Anzahl von Öffnungen 4 entsprechend der Anzahl an vorhandenen Filterelementen 3. In diese Öffnungen 4 sind die Filterelemente 3 eingeführt und sicher angeordnet. In diesen Öffnungen 4 sind weiterhin die erfindungsgemässen Dichtanordnungen 5 angeordnet. Das Unfiltrat fliesst durch die Kanäle der Filterelemente 2 und wird durch Strömen durch die auf der Kanalinnenwand aufgebrachten Membanre (filtrierende Schicht) der Filterelemente 2 in die entsprechenden Elemente hinein filtriert. Das Filtrat tritt am äusseren Umfang der Filterelemente 2 aus und wird in den Zwischenraum 8 vom Membranmodul 1 gesammelt und von dort hinausbefördert herausbefördert.

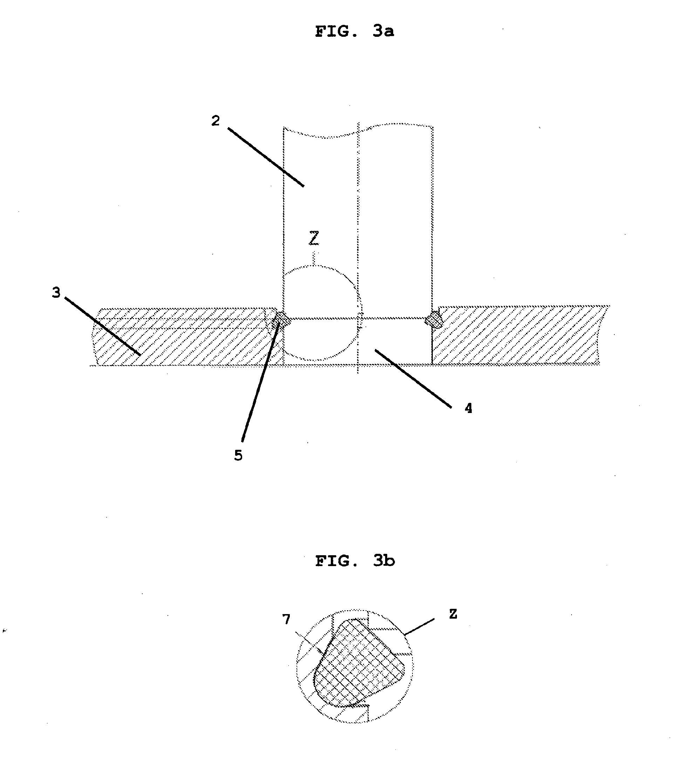

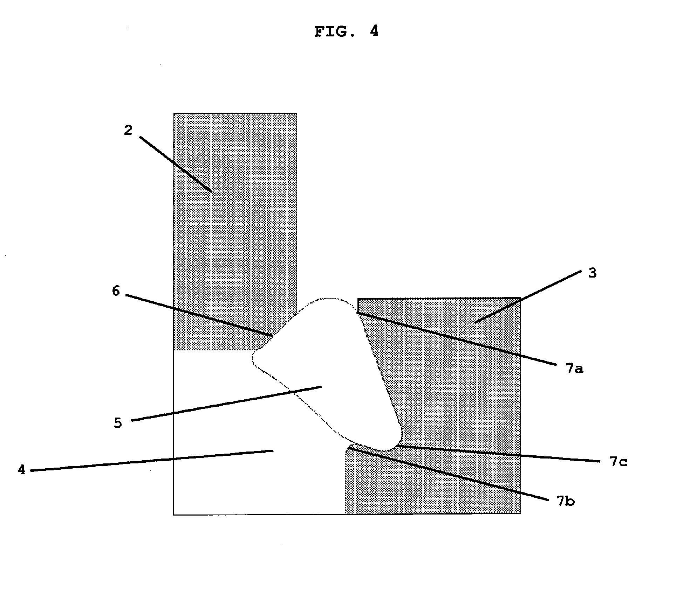

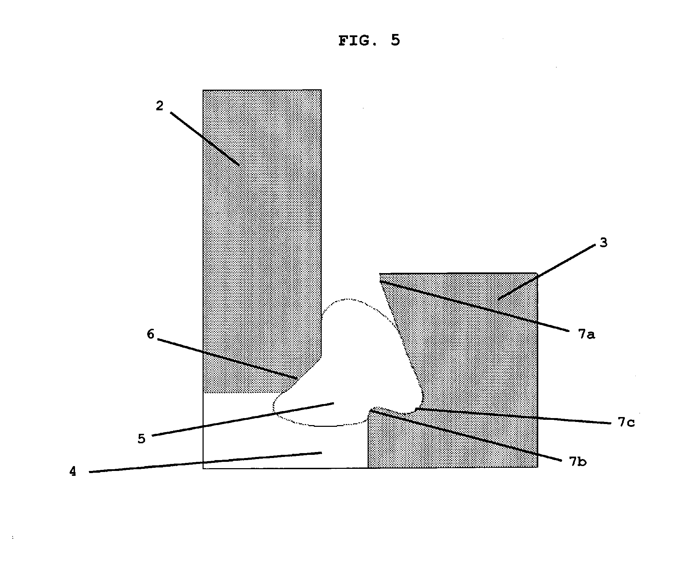

Eine Ausführungsform der erfindungsgemässen Dichtungsanordnung ist schematisch in Fig. 3a und 3b gezeigt. In einer bestimmten Höhe innerhalb der Öffnung 4 der Lochplatte 3, vorzugsweise am Rand der Lochplatte, ausgehend von der Seite, von welcher aus das Filterelement 2 eingeführt wird, ist ein ringförmiges Dichtelement 5 angeordnet. Wie man der Fig. 3b entnehmen kann, welche eine Vergrösserung des Abschnitts Z der Fig. 3 a zeigt, ist das Dichtelement 5 in einer passend geformten Nut 7 angeordnet. Das Dichtelement 5 besitzt gemäss dieser Ausführungsform einen dreieckigen Querschnitt mit abgerundeten Kanten. Weitere Erläuterungen zu dieser erfindungsgemässen Ausführungsform von Dichtelement 5 und Nut 7 finden sich nachstehend zu den Figuren 4 und 5. In Fig. 4 ist ein vergrösserter Querschnitt durch eine Ausführungsform der erfindungsgemässen Lochplatte 3 dargestellt. Ein stabförmiges keramisches Filterelement 2 mit abgeschrägtem Endbereich 6 ist soweit in die Öffnung 4 der Lochplatte 3 geschoben, dass sie in Kontakt mit dem Dichtelement 5 tritt, ohne dieses jedoch wesentlich zu verformen. Das Dichtelement 5 ist vorzugsweise um 45° geneigt in der Öffnung 4 angeordnet, so dass es zu einer optimalen Berührung zwischen Dichtelement 5 und abgeschrägtem Endbereich 6 des Filterelements 2 kommt. Das Dichtelement 7 weist einen dreieckigen Querschnitt auf und ist fest in einer analog geformten Nut mit den Kanten 7a, 7b und 7c angeordnet. Die Innenkante 7c ist abgerundet und befindet sich etwas unterhalb des Niveaus der unteren Randkante 7b, so dass die gewünschte Neigung des Dichtelements 5 gewährleistet ist, wenn es in die Nut eingebracht ist.

Die untere Randkante 7b der Nut ragt weiter radial als die obere Randkante 7a der Nut in die Öffnung 4 hinein, so dass innerhalb der Öffnung 4 eine Stufe ausgebildet ist. Dies bietet dem Dichtelement zusätzlichen Schutz gegen eine Verschiebung nach unten, wenn das Filterelement 2 weiter in die Öffnung 4 hinein bewegt wird.

In Fig. 5 ist eine entsprechende Querschnittsansicht analog zu Fig. 4 gezeigt, nur dass das Filterelement 2 weiter in die Öffnung 4 hinein bewegt wurde. Das Dichtelement 5 ist aufgrund dessen deutlich verformt, verhindert aber ein weiteres Hineinbewegen des Filterelements 2 in die Öffnung 4. Gleichzeitig fungiert das Dichtelement 5 als Anschlagdämpfer für das Filterelement 2, da es Druckstösse kompensieren kann.

In Fig. 5 ist eine Ausführungsform gezeigt, bei welcher das Filterelement 2 an der zur Einführung in die Lochplatte 3 vorgesehenen Seite abgeschrägte Kanten 6 aufweist, vorzugsweise um 30 bis 60°, insbesondere bevorzugt um 40-50° abgeschrägte Kanten.

Beispielsweise kann bei der Ausführungsform gemäss Fig. 5 das Filterelement 2 einen Durchmesser von 52 mm und die Öffnung 4 einen Durchmesser von 57 mm aufweisen, wodurch sich ein Spalt zwischen Öffnungswand und Aussenfläche des Filterelements 2 von 2.5 mm ergibt. Die Nut 7 kann hierbei beispielsweise eine Tiefe von unterer Randkante 7b bis zum Abschnitt der inneren Randkante 7c, welcher am weitesten von der unteren Randkante 7b entfernt ist, von 3.8 mm aufweisen. Vorzugsweise besitzt das Dichtelement 5 hierbei eine Höhe seines in etwa dreieckigen Querschnitts von etwa 6.1 mm und eine Breite seines in etwa dreieckigen Querschnitts von ebenfalls etwa 6.1 mm. Vorzugsweise ist das Dichtelement 5 derart geneigt (beispielsweise um 45°) in der Nut 7 angeordnet, dass es zum Kontakt zwischen Filterelement 2 und Dichtelement 5 kommt, wenn die Unterkante des abgeschrägten Filterelements 2 sich etwa 4 mm oberhalb der unteren Randkante 7b befindet. Gemäss dieser Ausführungsform kann das Filterelement bis zu einem Abstand von 3.38 mm zur unteren Randkante 7b in die Öffnung 4 bewegt werden. Hierbei kommt es nicht nur zu einer abdichtenden Wirkung durch das Dichtelement 5, sondern auch zu einer anschlagdämpfenden Wirkung.

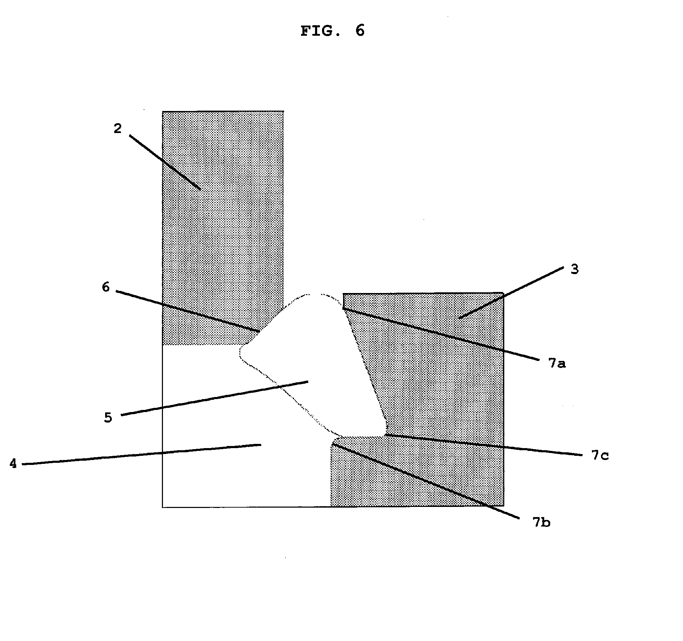

In Fig. 6 ist ein vergrösserter Querschnitt durch eine alternative Ausführungsform der erfindungsgemässen Lochplatte 3 dargestellt. Die Bezugszeichen der Fig. 6 entsprechen den Bezugszeichen der Fig. 4. Im Unterschied zur Ausführungsform gemäss Fig. 4 weist das Dichtelement 7 einen viereckigen Querschnitt auf und ist fest in einer analog geformten Nut mit den Kanten 7a, 7b und 7c angeordnet. Die Innenkante 7c ist abgerundet und befindet sich auf dem gleichen Niveau wie die untere Randkante 7b.

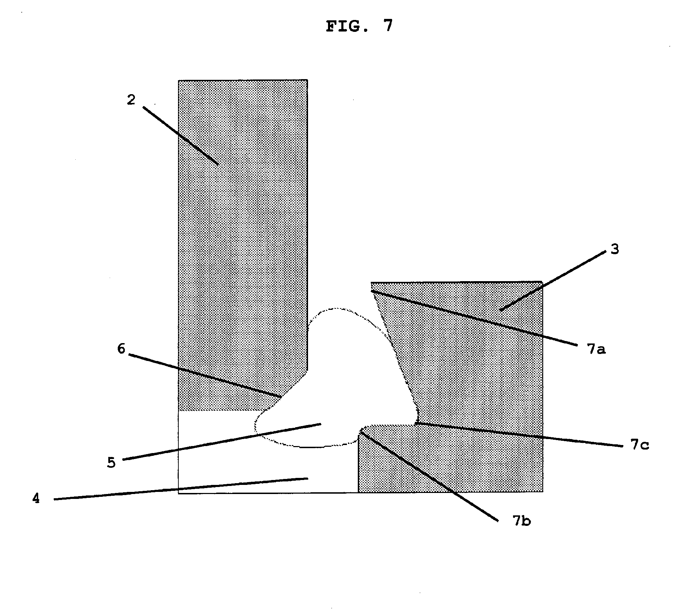

In Fig. 7 ist eine entsprechende Querschnittsansicht analog zu Fig. 6 gezeigt, nur dass das Filterelement 2 weiter in die Öffnung 4 hinein bewegt wurde. Das Dichtelement 5 ist aufgrund dessen deutlich verformt, verhindert aber ein weiteres Hineinbewegen des Filterelements 2 in die Öffnung 4. Gleichzeitig fungiert das Dichtelement 5 als Anschlagdämpfer für das Filterelement 2, da es Druckstösse kompensieren kann.

## Patentansprüche

1. Dichtungsanordnung für ein stabförmiges keramisches Filterelement (2), **dadurch gekennzeichnet, dass** ein elastisches Dichtelement (5) in einer Öffnung (4) einer Lochplatte (3) zum Aufnehmen des stabförmigen keramischen Filterelements (2) in einer sich über den gesamten Öffnungsumfang in gleicher Höhe erstreckenden Nut (7) fest angeordnet ist, so dass das Dichtelement (5) ab einer vorgegebenen minimalen Einführtiefe des Filterelements (2) in die Lochplatte (3) derart mit dem Filterelement (2) in Wechselwirkung treten kann, dass durch Kontaktierung des Filterelements (2) mit dem Dichtelement (5) eine Abdichtung zwischen Filterelement (2) und Dichtelement (5) ausgebildet wird, und das Filterelement (2) nur bis zu einer vorgegebenen maximalen Position gegen das Dichtelement (5) bewegt und nur bis zu einer vorgegebenen maximalen Einführtiefe gegen das Dichtelement (5) in die Lochplatte (3) eingeführt werden kann.

2. Dichtungsanordnung nach Anspruch 1, **dadurch gekennzeichnet, dass** der Oberflächenabschnitt des Dichtelements (5), welcher für die Wechselwirkung mit dem stabförmigen keramischen Filterelement (2) vorgesehen ist, im eingebauten unverformten Zustand relativ zur Grundfläche der Lochplatte (3) geneigt ist, vorzugsweise um 45°.

3. Dichtungsanordnung nach einem der Ansprüche 1 oder 2, **dadurch gekennzeichnet, dass** die Dichtung zwischen Dichtelement (5) und freier stabförmigem keramischem Filterelement (2) totraumfrei ohne Zwischenraum zwischen den in Kontakt befindlichen Abschnitten des Filterelements und des Dichtelements ausgebildet ist.

4. Dichtungsanordnung nach einem der Ansprüche 1 bis 3, **dadurch gekennzeichnet, dass** das Dichtelement (5) im Zustand vor dem Kontakt mit dem stabförmigen keramischen Filterelements (2) einen dreieckigen Querschnitt mit vorzugsweise abgerundeten Kanten aufweist.

5. Dichtungsanordnung nach einem der Ansprüche 1 bis 3, **dadurch gekennzeichnet, dass** das Dichtelement (5) im Zustand vor dem Kontakt mit dem stabförmigen keramischen Filterelements (2) einen viereckigen Querschnitt mit vorzugsweise abgerundeten Kanten aufweist.

6. Dichtungsanordnung nach einem der Ansprüche 1 bis 5, **dadurch gekennzeichnet, dass** das Dichtelement (5) aus einem Gummimaterial wie Ethylen-Propylen-Dien-Kautschuk gefertigt ist.

7. Lochplatte (3) für ein stabförmiges keramisches Filterelement (2), umfassend mindestens eine, vorzugsweise 30 bis 120 Öffnungen (4) zur Aufnahme des stabförmigen keramischen Filterelements (2), **dadurch gekennzeichnet, dass** die Lochplatte (3) in mindestens einer Öffnung (4) zur Aufnahme des stabförmigen keramischen Filterelements (2) eine sich über den gesamten Öffnungsumfang in gleicher Höhe erstreckende Nut (7) zur festen Anordnung eines Dichtelements (5) gemäss den Ansprüchen 1 bis 6 aufweist.

8. Lochplatte (3) nach Anspruch7, **dadurch gekennzeichnet, dass** die Nut (7) am Rand der Öffnung (4) zur Aufnahme des stabförmigen keramischen Filterelements (2), ausgehend von der Seite, von welcher aus das Filterelement (2) eingeführt wird, bereitgestellt ist.

9. Lochplatte (3) nach Anspruch 7 oder 8, **dadurch gekennzeichnet, dass** die Nut (7) einen dreieckigen Querschnitt mit zwei Randkanten (7a, 7b)) und einer, vorzugsweise abgerundeten, Innenkante (7c) aufweist.

10. Lochplatte (3) nach Anspruch 9, **dadurch gekennzeichnet, dass** die Innenkante (7c) der Nut (7) unterhalb des Niveaus der unteren Randkante (7b) der Nut (7) liegt.

11. Lochplatte (3) nach Anspruch 9, **dadurch gekennzeichnet, dass** die Innenkante (7c) der Nut (7) auf dem gleichen Niveau wie die untere Randkante (7b) der Nut (7) liegt.

12. Lochplatte (3) nach einem der Ansprüche 7 bis 11, **dadurch gekennzeichnet, dass** die untere Randkante (7b) der Nut (7), ausgehend von der Seite, von welcher aus das Filterelement (2) eingeführt wird, weiter als die obere Randkante (7a) der Nut (7) in die Öffnung (4) zur Aufnahme des stabförmigen keramischen Filterelements (2) hineinragt, so dass in dieser Öffnung (4) eine Stufe ausgebildet ist.

13. Membranmodul (1), umfassend eine Dichtungsanordnung gemäss einem der Ansprüche 1 bis 6 in einer Lochplatte (3) gemäss einem der Ansprüche 7 bis 12, sowie mindestens ein stabförmiges keramisches Filterelement (2).

14. Membranmodul (1) nach Anspruch 13, **dadurch gekennzeichnet, dass** das mindestens eine stabförmiges keramisches Filterelement (2) an seiner zur Einführung in die Lochplatte (3) vorgesehenen Seite abgeschrägte Kanten aufweist.

## Claims

1. Sealing assembly for a rod-shaped ceramic filter element (2), **characterized in that** an elastic sealing element (5) is fixedly connected in an opening (4) of a perforated plate (3) for receiving the rod-shaped ceramic filter element (2) in a groove (7) extending at the same height over the entire circumference of the opening, so that, as from a predetermined minimum depth of insertion of the filter element (2) into the perforated plate (3), the sealing element (5) can begin to interact with the filter element (2) in such a way that the filter element (2) contacting the sealing element (5) has the effect of forming a seal between the filter element (2) and the sealing element (5), and the filter element (2) can be moved against the sealing element (5) only as far as a predetermined maximum position and can only be inserted into the perforated plate (3) against the sealing element (5) up to a predetermined maximum depth of insertion.

2. Sealing assembly according to Claim 1, **characterized in that**, in the fitted, undeformed state, the portion of the surface of the sealing element (5) that is intended for interacting with the rod-shaped ceramic filter element (2) is inclined in relation to the base area, of the perforated plate (3), preferably by 45°.

3. Sealing assembly according to either of Claims 1 and 2, **characterized in that** the seal between the sealing element (5) and the free rod-shaped ceramic filter element (2) is formed with no dead space, without any gap between the portions of the filter element and the sealing element that are in contact.

4. Sealing assembly according to one of Claims 1 to 3, **characterized in that**, in the state before contact with the rod-shaped ceramic filter element (2), the sealing element (5) has a triangular cross section with preferably rounded edges.

5. Sealing assembly according to one of Claims 1 to 3, **characterized in that**, in the state before contact with the rod-shaped ceramic filter element (2), the sealing element (5) has a rectangular cross section with preferably rounded edges.

6. Sealing assembly according to one of Claims 1 to 5, **characterized in that** the sealing element (5) is produced from a rubber material such as ethylenepropylene-diene rubber.

7. Perforated plate (3) for a rod-shaped ceramic filter element (2), comprising at least one, preferably 30 to 120, openings (4) for receiving the rod-shaped ceramic filter element (2), **characterized in that** the perforated plate (3) has in at least one opening (4) for receiving the rod-shaped ceramic filter element (2) a groove (7), extending at the same height over the entire circumference of the opening, for the fixed arrangement of a sealing element (5) according to Claims 1 to 6.

8. Perforated plate (3) according to Claim 7, **characterized in that** the groove (7) is provided at the periphery of the opening (4) for receiving the rod-shaped ceramic filter element (2), taken from the side from which the filter element (2) is inserted.

9. Perforated plate (3) according to Claim 7 or 8, **characterized in that** the groove (7) has a triangular cross section with two peripheral edges (7a, 7b) and one, preferably rounded, inner edge (7c).

10. Perforated plate (3) according to Claim 9, **characterized in that** the inner edge (7c) of the groove (7) lies below the level of the lower peripheral edge (7b) of the groove (7).

11. Perforated plate (3) according to Claim 9, **characterized in that** the inner edge (7c) of the groove (7) lies at the same level as the lower peripheral edge (7b) of the groove (7).

12. Perforated plate (3) according to one of Claims 7 to 11, **characterized in that** the lower peripheral edge (7b) of the groove (7) protrudes further into the opening (4) for receiving the rod-shaped ceramic filter element (2) than the upper peripheral edge (7a) of the groove (7), taken from the side from which the filter element (2) is inserted, so that a step is formed in this opening (4).

13. Membrane module (1), comprising a sealing assembly according to one of Claims 1 to 6 in a perforated plate (3) according to one of Claims 7 to 12, and also at least one rod-shaped ceramic filter element (2).

14. Membrane module (1) according to Claim 13, **characterized in that** the at least one rod-shaped ceramic filter element (2) has bevelled edges on its side that is intended for insertion into the perforated plate (3).

## Revendications

1. Agencement d'étanchéité pour un élément de filtre en céramique en forme de tige (2), **caractérisé en ce qu'**un élément d'étanchéité élastique (5) est disposé fixement dans une ouverture (4) d'une plaque perforée (3) destinée à recevoir l'élément de filtre en céramique en forme de tige (2), dans une rainure (7) s'étendant à la même hauteur sur toute la périphérie d'ouverture, de sorte que l'élément d'étanchéité (5) puisse coopérer, à partir d'une profondeur d'insertion minimale prédéfinie de l'élément de filtre (2) dans la plaque perforée (3), avec l'élément de filtre (2) de telle sorte que par contact de l'élément de filtre (2) avec l'élément d'étanchéité (5), une étanchéité soit réalisée entre l'élément de filtre (2) et l'élément d'étanchéité (5), et l'élément de filtre (2) peut être déplacé seulement jusqu'à une position maximale prédéfinie contre l'élément d'étanchéité (5) et peut être inséré dans la plaque perforée (3) contre l'élément d'étanchéité (5) seulement jusqu'à une profondeur d'insertion maximale prédéfinie.

2. Agencement d'étanchéité selon la revendication 1, **caractérisé en ce que** la portion de surface de l'élément d'étanchéité (5), qui est prévue pour coopérer avec l'élément de filtre en céramique en forme de tige (2), est inclinée dans l'état installé non déformé par rapport à la surface de base de la plaque perforée (3), de préférence suivant un angle de 45°.

3. Agencement d'étanchéité selon l'une quelconque des revendications 1 ou 2, **caractérisé en ce que** le joint d'étanchéité entre l'élément d'étanchéité (5) et l'élément de filtre en céramique en forme de tige libre (2) est réalisé sans espace mort et sans espace intermédiaire entre les portions en contact de l'élément de filtre et de l'élément d'étanchéité.

4. Agencement d'étanchéité selon l'une quelconque des revendications 1 à 3, **caractérisé en ce que** l'élément d'étanchéité (5), dans l'état avant le contact avec l'élément de filtre en céramique en forme de tige (2), présente une section transversale triangulaire ayant des arêtes de préférence arrondies.

5. Agencement d'étanchéité selon l'une quelconque des revendications 1 à 3, **caractérisé en ce que** l'élément d'étanchéité (5), dans l'état avant le contact avec l'élément de filtre en céramique en forme de tige (2), présente une section transversale rectangulaire ayant des arêtes de préférence arrondies.

6. Agencement d'étanchéité selon l'une quelconque des revendications 1 à 5, **caractérisé en ce que** l'élément d'étanchéité (5) est fabriqué en un matériau en caoutchouc tel que du caoutchouc éthylène-propylène-diène.

7. Plaque perforée (3) pour un élément de filtre en céramique en forme de tige (2), comprenant au moins une ouverture, de préférence 30 à 120 ouvertures (4) pour recevoir l'élément de filtre en céramique en forme de tige (2), **caractérisée en ce que** la plaque perforée (3) présente, dans au moins une ouverture (4) destinée à recevoir l'élément de filtre en céramique en forme de tige (2), une rainure (7) s'étendant à la même hauteur sur toute la périphérie d'ouverture en vue de l'agencement fixe d'un élément d'étanchéité (5) selon les revendications 1 à 6.

8. Plaque perforée (3) selon la revendication 7, **caractérisée en ce que** la rainure (7) est disposée au niveau du bord de l'ouverture (4) de manière à recevoir l'élément de filtre en céramique en forme de tige (2) à partir du côté depuis lequel l'élément de filtre (2) est inséré.

9. Plaque perforée (3) selon la revendication 7 ou 8, **caractérisée en ce que** la rainure (7) présente une section transversale triangulaire avec deux arêtes de bord (7a, 7b) et une arête intérieure (7c) de préférence arrondie.

10. Plaque perforée (3) selon la revendication 9, **caractérisée en ce que** l'arête intérieure (7c) de la rainure (7) se situe en dessous du niveau de l'arête de bord inférieure (7b) de la rainure (7).

11. Plaque perforée (3) selon la revendication 9, **caractérisée en ce que** l'arête intérieure (7c) de la rainure (7) se situe au même niveau que l'arête de bord inférieure (7b) de la rainure (7).

12. Plaque perforée (3) selon l'une quelconque des revendications 7 à 11, **caractérisée en ce que** l'arête de bord inférieure (7b) de la rainure (7), partant du côté depuis lequel l'élément de filtre (2) est inséré, pénètre dans l'ouverture (4) destinée à recevoir l'élément de filtre en céramique en forme de tige (2) plus loin que l'arête de bord supérieure (7a) de la rainure (7), de telle sorte qu'un gradin est réalisé dans cette ouverture (4).

13. Module de membrane (1) comprenant un agencement d'étanchéité selon l'une quelconque des revendications 1 à 6 dans une plaque perforée (3) selon l'une quelconque des revendications 7 à 12, ainsi qu'au moins un élément de filtre en céramique en forme de tige (2).

14. Module de membrane (1) selon la revendication 13, **caractérisé en ce que** l'au moins un élément de filtre en céramique en forme de tige (2) présente, au niveau de son côté prévu pour être inséré dans la plaque perforée (3), des arêtes biseautées.
